# EUROPEAN PATENT APPLICATION

(11) **EP 4 470 704 A1**
(43) Date of publication of application: **04.12.2024**
(21) Application number: 24176331.7
(22) Date of filing: 16.05.2024
(51) Int. Cl.: B23K 11/11, B23K 11/34, B23K 11/36, B23K 11/25

(54) **RESISTANCE SPOT JOINING METHOD AND RESISTANCE SPOT JOINING APPARATUS**

(30) Priority: 29.05.2023 JP 2023088016
(71) Applicant: OSAKA UNIVERSITY, Suita-shi Osaka 565-0871 (JP); DAIHEN Corporation, Yodogawa-ku Osaka-shi, Osaka 532-8512 (JP)
(72) Inventor: FUJII, Hidetoshi, Suita-shi, Osaka, 565-0871 (JP); MORISADA, Yoshiaki, Suita-shi, Osaka, 565-0871 (JP); AIBARA, Takumi, Suita-shi, Osaka, 565-0871 (JP); MIYAUCHI, Takaaki, Osaka-shi, Osaka, 532-8512 (JP)
(74) Representative: Hoffmann Eitle

(57) **Abstract**

A resistance spot joining method includes: a protrusion forming step of forming a protrusion (W11) on at least one of a first workpiece (W10) and a second workpiece (W20) by pressing the first and second workpieces with a first load by a pressing shaft (11) and a pressing member (12); a load reducing step of reducing an area of contact between the first and second workpieces by reducing a pressing force from the pressing shaft and the pressing member such that a second load (F2) is applied to the first and second workpieces; a current applying step of applying a current to the first and second workpieces; and a joining step of joining contact interfaces of the first and second workpiece (W10, W20) to each other by pressing the first and second workpieces with a third load.

## Description

### CROSS REFERENCE TO RELATED APPLICATIONS

This nonprovisional application is based on Japanese Patent Application No. 2023-088016 filed on May 29, 2023 with the Japan Patent Office, the entire contents of which are hereby incorporated by reference.

### BACKGROUND OF THE INVENTION

### Field of the Invention

The present disclosure relates to a resistance spot joining method and a resistance spot joining apparatus.

### Description of the Background Art

International Publication No. 2021/182444 discloses a solid-phase point joining apparatus including a pressing portion and a pair of welding electrodes. The pressing portion can press two metal plate members in a direction orthogonal to these two metal plate members. In the state in which the pair of welding electrodes sandwich these metal plate members from both sides in the thickness direction of these metal plate members, the pair of welding electrodes apply a current to these metal plate members so as to be heated.

### SUMMARY OF THE INVENTION

In the solid-phase point joining apparatus disclosed in International Publication No. 2021/182444, it is desirable to improve the joining quality.

An object of the present disclosure is to provide a resistance spot joining method and a resistance spot joining apparatus that allow an improvement in joining quality.

A resistance spot joining method according to one aspect of the present disclosure is a method of joining a first workpiece made of metal and a second workpiece made of metal. The method includes: a protrusion forming step of forming a protrusion on at least one of the first workpiece and the second workpiece by pressing the first workpiece and the second workpiece with a first load by a pressing shaft and a pressing member from both sides of the first workpiece and the second workpiece in a thickness direction of each of the first workpiece and the second workpiece, the pressing shaft being disposed on one side in the thickness direction, the pressing member being disposed on the other side in the thickness direction; a load reducing step of reducing an area of contact between the first workpiece and the second workpiece by reducing a pressing force from the pressing shaft and the pressing member such that a second load smaller than the first load is applied from the pressing shaft and the pressing member to the first workpiece and the second workpiece; a current applying step of applying a current to the first workpiece and the second workpiece in a state in which the second load is applied from the pressing shaft and the pressing member to the first workpiece and the second workpiece, and electrodes are respectively in contact with the first workpiece and the second workpiece; and a joining step of joining a contact interface of the first workpiece and a contact interface of the second workpiece to each other by pressing the first workpiece and the second workpiece with a third load larger than the second load by the pressing shaft and the pressing member from both sides in the thickness direction.

A resistance spot joining apparatus according to one aspect of the present disclosure includes: a pair of pressing shafts that press a first workpiece and a second workpiece from both sides in a thickness direction of each of the first workpiece and the second workpiece; a pair of electrodes respectively disposed around the pair of pressing shafts; a protrusion forming unit that causes a first load to be applied from the pair of pressing shafts to the first workpiece and the second workpiece so as to form a protrusion on each of the first workpiece and the second workpiece such that the protrusion on the first workpiece and the protrusion on the second workpiece are in contact with each other; a load reducing unit that reduces an area of contact between the protrusions by reducing a pressing force from the pair of pressing shafts such that a second load smaller than the first load is applied from the pair of pressing shafts to the first workpiece and the second workpiece; a current applying unit that causes a current to be applied to the first workpiece and the second workpiece in a state in which the second load is applied from the pair of pressing shafts to the first workpiece and the second workpiece, and the pair of electrodes are respectively in contact with an area around a portion of the first workpiece, the portion of the first workpiece being pressed by one of the pair of pressing shafts, and in contact with an area around a portion of the second workpiece, the portion of the second workpiece being pressed by the other of the pair of pressing shafts; and a joining unit that causes a third load larger than the second load to be applied from the pair of pressing shafts to the protrusions when a softening condition is satisfied, the softening condition indicating that the protrusions are softened.

The foregoing and other objects, features, aspects, and advantages of the present invention will become apparent from the following detailed description of the present invention, which is understood in conjunction with the accompanying drawings.

### BRIEF DESCRIPTION OF THE DRAWINGS

Fig. 1 is a diagram schematically showing a resistance spot joining apparatus according to one embodiment of the present disclosure.
Fig. 2 is a diagram schematically showing a current applying step after a load reducing step.
Fig. 3 is an enlarged view of a range indicated by a solid line III in Fig. 2.
Fig. 4 is a flowchart illustrating details of a control operation of a controller.

### DESCRIPTION OF THE PREFERRED EMBODIMENTS

Embodiments of the present disclosure will be hereinafter described with reference to the accompanying drawings. In the drawings referred to below, the same or corresponding members are denoted by the same reference characters.

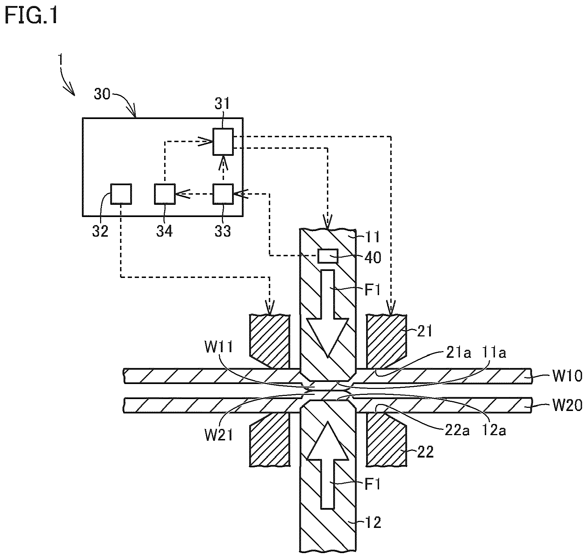

Fig. 1 is a diagram schematically showing a resistance spot joining apparatus according to one embodiment of the present disclosure. A resistance spot joining apparatus 1 serves to apply a current to a plurality of workpieces W10 and W20 stacked on each other to form a softened region in each of these workpieces W10 and W20, and also causes the softened regions to plastically deform such that workpieces W10 and W20 in a solid-phase state are joined to each other. In other words, this resistance spot joining apparatus 1 performs "solid-phase joining" (solid-phase welding) that does not involve melting of the workpieces W10 and W20, rather than the typical resistance spot welding that involves melting of the workpieces W10 and W20.

The plurality of workpieces W10 and W20 include a first workpiece W10 and a second workpiece W20. Each of workpieces W10 and W20 is made of metal such as iron or aluminum. Each of workpieces W10 and W20 is formed in a flat plate shape, for example.

As shown in Fig. 1, resistance spot joining apparatus 1 includes a pressing shaft 11, a pressing member 12, a pair of electrodes 21 and 22, a controller 30, and a sensor 40. In the present embodiment, a pressing shaft paired with pressing shaft 11 is used as pressing member 12. Thus, in the following, pressing shaft 11 and pressing member 12 will be described as "a pair of pressing shafts 11 and 12".

The pair of pressing shafts 11 and 12 can press first workpiece W10 and second workpiece W20, respectively, from both sides in the thickness direction of each of first workpiece W10 and second workpiece W20. The pair of pressing shafts 11 and 12 are driven by a drive source (a servo press or the like) (not shown). The pair of pressing shafts 11 and 12 include a first pressing shaft 11 and a second pressing shaft 12.

First pressing shaft 11 has a shape elongated in one direction (in the up-down direction in Fig. 1). First pressing shaft 11 can press first workpiece W10 such that first workpiece W10 is plastically deformed. Specifically, first pressing shaft 11 can press first workpiece W10 such that a protrusion W11 is formed on first workpiece W10. First pressing shaft 11 is made of tungsten carbide, for example. In the present embodiment, first pressing shaft 11 is formed in a cylindrical shape. First pressing shaft 11 has a pressing surface 11a that presses first workpiece W10. Pressing surface 1 1a is formed of an end surface of first pressing shaft 11. Pressing surface 11a is formed in a circular shape.

Sensor 40 is provided, for example, in first pressing shaft 11. In the present embodiment, a load cell is used as sensor 40. The position where sensor 40 is provided is not limited to first pressing shaft 11.

Second pressing shaft 12 has the same configuration as that of first pressing shaft 11. Second pressing shaft 12 is disposed in a posture in which a central axis of second pressing shaft 12 is located along an extension line of a central axis of first pressing shaft 11 and a pressing surface 12a of second pressing shaft 12 faces pressing surface 1 1a of first pressing shaft 11.

The pair of electrodes 21 and 22 in the state of being in contact with first workpiece W10 and second workpiece W20, respectively, can apply a current to first workpiece W10 and second workpiece W20. A voltage is applied to the pair of electrodes 21 and 22 from a power supply unit (not shown). The pair of electrodes 21 and 22 include a first electrode 21 and a second electrode 22.

First electrode 21 can be brought into contact with an area around a portion of first workpiece W10, the portion of first workpiece W10 being pressed by first pressing shaft 11. In the present embodiment, first electrode 21 is formed in a cylindrical shape surrounding first pressing shaft 11. There is a gap provided between an inner peripheral surface of first electrode 21 and an outer peripheral surface of first pressing shaft 11. First electrode 21 is made of copper, for example. First electrode 21 has a contact surface 21a that comes into contact with first workpiece W10. Contact surface 21a is formed in an annular shape. The shape of contact surface 21a is not limited to an annular shape.

Second electrode 22 has the same configuration as that of first electrode 21. Second electrode 22 can be brought into contact with an area around a portion of second workpiece W20, the portion of second workpiece W20 being pressed by second pressing shaft 12. Second electrode 22 is disposed in a posture in which the central axis of second electrode 22 is located along an extension line of the central axis of first electrode 21 and a contact surface 22a of second electrode 22 faces contact surface 21a of first electrode 21.

Controller 30 controls the pair of pressing shafts 11 and 12 and the pair of electrodes 21 and 22. Specifically, controller 30 controls: the loads acting on first workpiece W10 and second workpiece W20 from the pair of pressing shafts 11 and 12; the loads acting on first workpiece W10 and second workpiece W20 from the pair of electrodes 21 and 22; the voltage applied to the pair of electrodes 21 and 22; and the amount by which the pair of pressing shafts 11 and 12 and the pair of electrodes 21 and 22 each are pressed. Controller 30 includes a load control unit 31, a current application control unit 32, an acquisition unit 33, and a determination unit 34.

Load control unit 31 performs an operation of causing a first load F1 (see Fig. 1) to be applied to first workpiece W10 and second workpiece W20 from the pair of pressing shafts 11 and 12 so as to form protrusions W11 and W21 on first workpiece W10 and second workpiece W20, respectively, such that protrusion W11 on first workpiece W10 and protrusion W21 on second workpiece W20 come into contact with each other. In other words, load control unit 31 constitutes a protrusion forming unit. At this time, load control unit 31 also performs an operation of causing an adjustment load (for example, a load of 1 kN or less) smaller than first load F1 to be applied to first workpiece W10 and second workpiece W20 from the pair of electrodes 21 and 22.

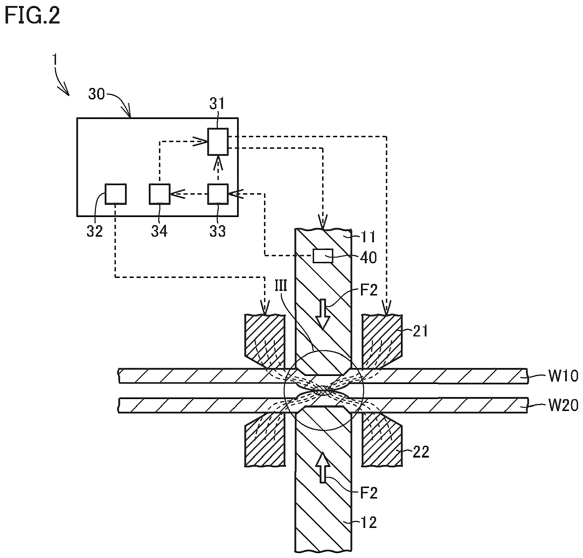

Then, load control unit 31 performs an operation of reducing an area of contact between protrusions W11 and W21 by reducing a pressing force from the pair of pressing shafts 11 and 12 such that a second load F2 (see Fig. 2) smaller than first load F1 is applied to first workpiece W10 and second workpiece W20 from the pair of pressing shafts 11 and 12. In other words, load control unit 31 constitutes a load reducing unit. Second load F2 may be zero. Specifically, "load reducing" means reducing at least a part of the load applied to each of workpieces W10 and W20. At this time, load control unit 31 may cause the adjustment load to be continuously applied to first workpiece W10 and second workpiece W20 from the pair of electrodes 21 and 22.

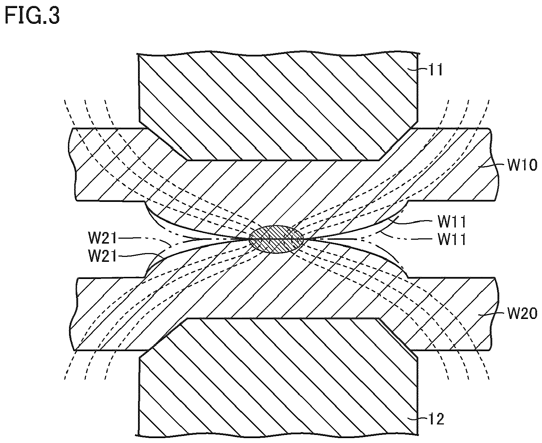

Then, current application control unit 32 performs an operation of applying a current to first workpiece W10 and second workpiece W20. Specifically, in the state in which load control unit 31 causes second load F2 to be applied to first workpiece W10 and second workpiece W20 from the pair of pressing shafts 11 and 12, brings contact surface 21a of first electrode 21 into contact with an area around a portion of first workpiece W10 that is pressed by first pressing shaft 11, and brings contact surface 22a of second electrode 22 into contact with an area around a portion of second workpiece W20 that is pressed by second pressing shaft 12, current application control unit 32 performs an operation of causing a current to be applied to first workpiece W10 and second workpiece W20. In other words, current application control unit 32 constitutes a current applying unit. In Figs. 2 and 3, dashed lines each indicate the flow of the current during this operation.

Then, when the softening condition indicating that protrusions W11 and W21 have been softened is satisfied, load control unit 31 performs an operation of causing a third load larger than second load F2 to be applied to protrusions W11 and W21 from the pair of pressing shafts 11 and 12. In other words, load control unit 31 constitutes a joining unit.

Determination unit 34 determines whether or not the softening condition has been satisfied, and sends the result of determination to load control unit 31. For example, determination unit 34 receives the detection value of sensor 40 from acquisition unit 33 that acquires the detection value of sensor 40. Then, when the detection value becomes equal to or less than a threshold value, determination unit 34 determines that the softening condition has been satisfied.

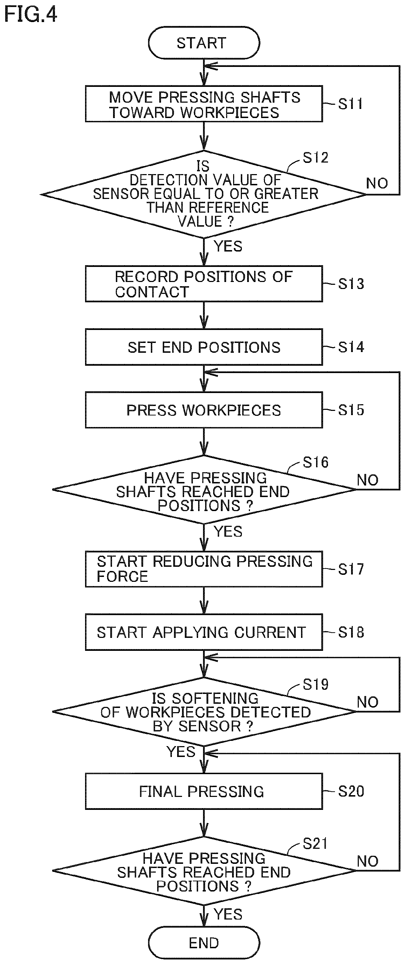

The following describes specific details of a control operation of controller 30 with reference to Fig. 4.

First, controller 30 causes the pair of pressing shafts 11 and 12 to move toward first workpiece W10 and second workpiece W20 (step S11).

Then, controller 30 determines whether or not the detection value of sensor 40 is equal to or greater than a reference value (step S12). Note that the reference value is set at a value attained when the pair of pressing shafts 11 and 12 come into contact with first workpiece W10 and second workpiece W20.

When the detection value of sensor 40 is less than the reference value, controller 30 returns the process to step S11. When the detection value of sensor 40 is equal to or greater than the reference value, controller 30 records the positions of the pair of pressing shafts 11 and 12 at that time (step S13).

Then, controller 30 sets the end positions of the pair of pressing shafts 11 and 12 (step S14). Note that the end positions are respectively set at positions at which the pair of pressing shafts 11 and 12 move close to each other by a prescribed distance from the position at which the pair of pressing shafts 11 and 12 respectively come into contact with first workpiece W10 and second workpiece W20. In other words, the end positions are respectively set at positions where protrusions W11 and W21 are formed on first workpiece W10 and second workpiece W20.

Then, controller 30 cause the pair of pressing shafts 11 and 12 to start pressing first workpiece W10 and second workpiece W20 (step S15).

Then, controller 30 determines whether or not the pair of pressing shafts 11 and 12 have reached their respective end positions (step S16). When the pair of pressing shafts 11 and 12 have reached their respective end positions, first load F1 is applied from the pair of pressing shafts 11 and 12 to first workpiece W10 and second workpiece W20.

As a result, when the pair of pressing shafts 11 and 12 have not yet reached their respective end positions, controller 30 returns the process to step S15. When the pair of pressing shafts 11 and 12 have reached their respective end positions (when first load F1 is applied from the pair of pressing shafts 11 and 12 to first workpiece W10 and second workpiece W20), controller 30 causes the pressing force from the pair of pressing shafts 11 and 12 to be reduced such that second load F2 acts on first workpiece W10 and second workpiece W20 (step S17).

Since this results in the reduced amount of elastic deformation of each of workpieces W10 and W20, as shown in Fig. 3, protrusions W11 and W21 come into contact only at their tip end portions (central portions) with each other, so that the area of contact between protrusions W11 and W21 becomes smaller. In Fig. 3, solid lines indicate the outer shapes of protrusions W11 and W21 from which a load has been reduced, and two-dot chain lines indicate the outer shapes of protrusions W11 and W21 from which a load has not yet been reduced.

Then, controller 30 causes a current to be applied to first workpiece W10 and second workpiece W20 in the state in which second load F2 is applied from the pair of pressing shafts 11 and 12 to first workpiece W10 and second workpiece W20, contact surface 21a of first electrode 21 is brought into contact with an area around a portion of first workpiece W10 that is pressed by first pressing shaft 11, and contact surface 22a of second electrode 22 is brought into contact with an area around a portion of second workpiece W20 that is pressed by second pressing shaft 12 (step S18).

Thereby, as indicated by diagonal lines in Fig. 3, the central portions of protrusions W11 and W21 effectively generate heat. In step S18, based on the detection value of sensor 40, controller 30 may detect the degree by which the load is reduced.

Then, based on the detection value of sensor 40, controller 30 determines whether or not protrusions W11 and W21 on respective first workpiece W10 and second workpiece W20 have been softened (step S19). Note that controller 30 determines whether or not protrusions W11 and W21 have been softened, based on whether or not the detection value of sensor 40 is equal to or less than the threshold value.

When the detection value of sensor 40 is greater than the threshold value (when protrusions W11 and W21 have not yet been softened), controller 30 returns the process to step S18 or continues the process of step S19. When the detection value of sensor 40 is equal to or less than the threshold value (when protrusions W11 and W21 have been softened), controller 30 causes the pair of pressing shafts 11 and 12 to press protrusions W11 and W21 such that a third load larger than second load F2 is applied from the pair of pressing shafts 11 and 12 to protrusions W11 and W21 (step S20).

Thereby, the softened regions of protrusions W11 and W21 (regions including the contact interfaces of first workpiece W10 and second workpiece W20) are plastically deformed, and also joined to each other while being in the solid-phase state.

Finally, controller 30 determines whether or not the pair of pressing shafts 11 and 12 have reached their respective end positions (step S21). When the pair of pressing shafts 11 and 12 have not yet reached their respective end positions, controller 30 returns the process to step S20. When the pair of pressing shafts 11 and 12 have reached their respective end positions, controller 30 ends the control process.

Resistance spot joining apparatus 1 as described above is capable of executing the following resistance spot joining method. The resistance spot joining method includes a protrusion forming step, a load reducing step, a current applying step, and a joining step.

The protrusion forming step is a step of pressing first workpiece W10 and second workpiece W20 with first load F1 from both sides in the thickness direction by the pair of pressing shafts 11 and 12, to thereby form protrusions W11 and W21 respectively on first workpiece W10 and second workpiece W20 such that protrusions W11 and W21 are in contact with each other. This step corresponds to the above-described steps S15 and S16.

The load reducing step is a step of, after the protrusion forming step, reducing the area of contact between protrusions W11 and W21 by reducing the pressing force from the pair of pressing shafts 11 and 12 such that second load F2 smaller than first load F1 is applied from the pair of pressing shafts 11 and 12 to first workpiece W10 and second workpiece W20. This step corresponds to the above-described step S17.

The current applying step is a step of, after the load reducing step, applying a current to first workpiece W10 and second workpiece W20 in the state in which second load F2 is applied from the pair of pressing shafts 11 and 12 to first workpiece W10 and second workpiece W20, contact surface 21a of first electrode 21 is brought into contact with an area around a portion of first workpiece W10 that is pressed by first pressing shaft 11, and contact surface 22a of second electrode 22 is brought into contact with an area around a portion of second workpiece W20 that is pressed by second pressing shaft 12. This step corresponds to the above-described steps S18 and S19.

The joining step is a step of, after the current applying step, joining protrusions W11 and W21 to each other by pressing protrusion W11 formed on first workpiece W10 and protrusion W21 formed on second workpiece W20 from both sides in the thickness direction with the third load larger than second load F2 by the pair of pressing shafts 11 and 12. This step corresponds to the above-described steps S20 and S21.

As described above, in the resistance spot joining method according to the present embodiment, the load reducing step is performed after formation of the protrusions, so that the area of contact between protrusions W11 and W21 becomes smaller after the load reducing step than before the load reducing step. Thereby, only the central portion of each of protrusions W11 and W21 becomes a contact portion, i.e., an area through which a current flows, and the resistance of contact also increases in this contact portion, with the result that each central portion effectively generates heat in the current applying step. Further, when plating layers are formed on the surfaces of first workpiece W10 and second workpiece W20, these plating layers are effectively removed in the current applying step. Then, in the joining step, protrusions W11 and W21 are joined to each other from the central portions to the peripheral portions thereof while being plastically deformed. Therefore, the joining quality is improved.

The above embodiments have been described with regard to an example in which first workpiece W10 and second workpiece W20 are joined to each other, but the resistance spot joining method is also applicable to a case in which three or more workpieces are joined to each other.

Further, the above embodiments have been described with regard to an example in which the detection value of the load cell (sensor 40) is used in both steps S13 and S18, but in step S18, a sensor different from the load cell may detect softening of each of workpieces W10 and W20. As such a sensor, a camera capable of taking a picture of a contact portion between protrusions W11 and W12 may be used. In this case, based on the brightness of the contact portion acquired by acquisition unit 33, determination unit 34 determines whether or not the softening condition has been satisfied. Alternatively, a contact-type or contactless-type thermometer may be used as such a sensor, and determination unit 34 may determine whether or not the softening condition has been satisfied based on the temperature in the contact portion that has been acquired by acquisition unit 33. Alternatively, determination unit 34 may determine whether or not the softening condition has been satisfied based on the results of calculation of the heat quantity in each of workpieces W10 and W20 that has been acquired in advance and also based on a timer of the power supply.

It will be understood by those skilled in the art that the above-described exemplary embodiments are illustrative examples of the following aspects.

### [Aspect 1]

A resistance spot joining method of joining a first workpiece made of metal and a second workpiece made of metal, the resistance spot joining method comprising:
a protrusion forming step of forming a protrusion on at least one of the first workpiece and the second workpiece by pressing the first workpiece and the second workpiece with a first load by a pressing shaft and a pressing member from both sides of the first workpiece and the second workpiece in a thickness direction of each of the first workpiece and the second workpiece, the pressing shaft being disposed on one side in the thickness direction, the pressing member being disposed on the other side in the thickness direction;
a load reducing step of reducing an area of contact between the first workpiece and the second workpiece by reducing a pressing force from the pressing shaft and the pressing member such that a second load smaller than the first load is applied from the pressing shaft and the pressing member to the first workpiece and the second workpiece;
a current applying step of applying a current to the first workpiece and the second workpiece in a state in which the second load is applied from the pressing shaft and the pressing member to the first workpiece and the second workpiece, and electrodes are respectively in contact with the first workpiece and the second workpiece; and
a joining step of joining a contact interface of the first workpiece and a contact interface of the second workpiece to each other by pressing the first workpiece and the second workpiece with a third load larger than the second load by the pressing shaft and the pressing member from both sides in the thickness direction.

In the above-mentioned joining method, the load reducing step is performed after formation of the protrusions, so that the area of contact between the workpieces becomes smaller after the load reducing step than before the load reducing step. Thereby, only the central portion of each protrusion becomes a contact portion, i.e., an area through which a current flows, with the result that each central portion effectively generates heat in the current applying step. Then, in the joining step, the protrusions are jointed to each other from the central portions to the peripheral portions thereof while being plastically deformed. Therefore, the joining quality is improved.

### [Aspect 2]

The resistance spot joining method according to Aspect 1, wherein
in the protrusion forming step, the protrusion is formed on each of the first workpiece and the second workpiece with use of the pressing shaft paired with a pressing shaft as the pressing member, and
in the joining step, the protrusion formed on the first workpiece and the protrusion formed on the second workpiece are joined to each other.

### [Aspect 3]

The resistance spot joining method according to Aspect 1 or 2, wherein, in the joining step, after portions of contact between the first workpiece and the second workpiece are softened, the contact interface of the first workpiece and the contact interface of the second workpiece are joined to each other.

In this aspect, the joining quality is further improved.

### [Aspect 4]

A resistance spot joining apparatus comprising:
a pair of pressing shafts that press a first workpiece and a second workpiece from both sides of the first workpiece and the second workpiece in a thickness direction of each of the first workpiece and the second workpiece;
a pair of electrodes respectively disposed around the pair of pressing shafts;
a protrusion forming unit that causes a first load to be applied from the pair of pressing shafts to the first workpiece and the second workpiece so as to form a protrusion on each of the first workpiece and the second workpiece such that the protrusion on the first workpiece and the protrusion on the second workpiece are in contact with each other;
a load reducing unit that reduces an area of contact between the protrusions by reducing a pressing force from the pair of pressing shafts such that a second load smaller than the first load is applied from the pair of pressing shafts to the first workpiece and the second workpiece;
a current applying unit that causes a current to be applied to the first workpiece and the second workpiece in a state in which the second load is applied from the pair of pressing shafts to the first workpiece and the second workpiece, and the pair of electrodes are respectively in contact with an area around a portion of the first workpiece, the portion of the first workpiece being pressed by one of the pair of pressing shafts, and in contact with an area around a portion of the second workpiece, the portion of the second workpiece being pressed by the other of the pair of pressing shafts; and
a joining unit that causes a third load larger than the second load to be applied from the pair of pressing shafts to the protrusions when a softening condition is satisfied, the softening condition indicating that the protrusions are softened.

### [Aspect 5]

The resistance spot joining apparatus according to Aspect 4, further comprising:
a sensor that is capable of detecting a load applied from the pair of pressing shafts to the first workpiece and the second workpiece; and
a determination unit that determines that the softening condition is satisfied when a detection value of the sensor becomes equal to or less than a threshold value.

Although the embodiments of the present invention have been described, it should be understood that the embodiments disclosed herein are illustrative and not restrictive in every respect. The scope of the present invention is defined by the scope of the claims, and is intended to include any modifications within the meaning and scope equivalent to the scope of the claims.

## Claims

1. A resistance spot joining method of joining a first workpiece (W10) made of metal and a second workpiece (W20) made of metal, the resistance spot joining method comprising:
a protrusion (W1 1) forming step of forming a protrusion (W1 1) on at least one of the first workpiece (W10) and the second workpiece (W20) by pressing the first workpiece (W10) and the second workpiece (W20) with a first load (F1) by a pressing shaft (11) and a pressing member (12) from both sides of the first workpiece (W10) and the second workpiece (W20) in a thickness direction of each of the first workpiece (W10) and the second workpiece (W20), the pressing shaft (11) being disposed on one side in the thickness direction, the pressing member (12) being disposed on the other side in the thickness direction;
a load reducing step of reducing an area of contact between the first workpiece (W10) and the second workpiece (W20) by reducing a pressing force from the pressing shaft and the pressing member such that a second load (F2) smaller than the first load (F1) is applied from the pressing shaft and the pressing member to the first workpiece (W10) and the second workpiece (W20);
a current applying step of applying a current to the first workpiece (W10) and the second workpiece (W20) in a state in which the second load (F2) is applied from the pressing shaft and the pressing member to the first workpiece (W10) and the second workpiece (W20), and electrodes (21, 22) are respectively in contact with the first workpiece (W10) and the second workpiece (W20); and
a joining step of joining a contact interface of the first workpiece (W10) and a contact interface of the second workpiece (W20) to each other by pressing the first workpiece (W10) and the second workpiece (W20) with a third load larger than the second load (F2) by the pressing shaft and the pressing member from both sides in the thickness direction.

2. The resistance spot joining method according to claim 1, wherein
in the protrusion (W11) forming step, the protrusion (W11) is formed on each of the first workpiece (W10) and the second workpiece (W20) with use of the pressing shaft (11) paired with a pressing shaft as the pressing member (12), and
in the joining step, the protrusion (W11) formed on the first workpiece (W10) and the protrusion (W1 1) formed on the second workpiece (W20) are joined to each other.

3. The resistance spot joining method according to claim 1 or 2, wherein, in the joining step, after portions of contact between the first workpiece (W10) and the second workpiece (W20) are softened, the contact interface of the first workpiece (W10) and the contact interface of the second workpiece (W20) are joined to each other.

4. A resistance spot joining apparatus (1) comprising:
a pair of pressing shafts (11, 12) that press a first workpiece (W10) and a second workpiece (W20) from both sides of the first workpiece (W10) and the second workpiece (W20) in a thickness direction of each of the first workpiece (W10) and the second workpiece (W20);
a pair of electrodes (21, 22) respectively disposed around the pair of pressing shafts;
a protrusion forming unit (31) that causes a first load (F1) to be applied from the pair of pressing shafts to the first workpiece (W10) and the second workpiece (W20) so as to form a protrusion (W1 1) on each of the first workpiece (W10) and the second workpiece (W20) such that the protrusion (W1 1) on the first workpiece (W10) and the protrusion (W11) on the second workpiece (W20) are in contact with each other;
a load reducing unit (31) that reduces an area of contact between the protrusions (W11) by reducing a pressing force from the pair of pressing shafts such that a second load (F2) smaller than the first load (F1) is applied from the pair of pressing shafts to the first workpiece (W10) and the second workpiece (W20);
a current applying unit (32) that causes a current to be applied to the first workpiece (W10) and the second workpiece (W20) in a state in which the second load (F2) is applied from the pair of pressing shafts to the first workpiece (W10) and the second workpiece (W20), and the pair of electrodes are respectively in contact with an area around a portion of the first workpiece (W10), the portion of the first workpiece (W10) being pressed by one of the pair of pressing shafts, and in contact with an area around a portion of the second workpiece (W20), the portion of the second workpiece (W20) being pressed by the other of the pair of pressing shafts; and
a joining unit (31) that causes a third load larger than the second load (F2) to be applied from the pair of pressing shafts to the protrusions (W1 1) when a softening condition is satisfied, the softening condition indicating that the protrusions (W1 1) are softened.

5. The resistance spot joining apparatus (1) according to claim 4, further comprising:
a sensor (40) that is capable of detecting a load applied from the pair of pressing shafts to the first workpiece (W10) and the second workpiece (W20); and
a determination unit (34) that determines that the softening condition is satisfied when a detection value of the sensor (40) becomes equal to or less than a threshold value.
